# EUROPÄISCHE PATENTANMELDUNG

(11) **EP 4 082 703 A1**
(43) Veröffentlichungstag der Anmeldung: **02.11.2022**
(21) Anmeldenummer: 21170477.0
(22) Anmeldetag: 26.04.2021
(51) Int. Cl.: B23B 51/04, B28D 1/04, B28D 7/00

(54) **VERFAHREN ZUM LÖSEN EINES BOHRKERNS AUS EINER BOHRKRONE EINES KERNBOHRGERÄTS UND KERNBOHRGERÄT**

(71) Anmelder: Hilti Aktiengesellschaft, 9494 Schaan (LI)
(72) Erfinder: Lacher, Michael, 86830 Schwabmünchen (DE); Ringler, Stefan, 86853 Schwabmühlhausen (DE); Ouni, Manel, 86199 Augsburg (DE); Schwab, Roland, 82269 Geltendorf (DE)
(74) Vertreter: Hilti Aktiengesellschaft Corporate Intellectual Property

(57) **Zusammenfassung**

Ein Bohrkern (5) wird aus einer Bohrkrone (2) eines Kernbohrgeräts (1) gelöst. Eine intuitive Bewegung erkannt und als Auslöser für einen Ausrüttelvorgang für den Bohrkern verwendet wird. Bei der intuitiven Bewegung kann es sich beispielsweise um eine Schüttelbewegung des Kernbohrgeräts handeln.

Ein Kernbohrgerät (1) zur Durchführung dieses Verfahrens umfasst vorzugsweise einen Gyro-Sensor zur Erfassung der intuitiven Bewegung des Kernbohrgeräts (1).

## Beschreibung

Die vorliegende Erfindung betrifft ein Verfahren zum Lösen eines Bohrkerns aus einer Bohrkrone eines Kernbohrgeräts, wobei eine intuitive Bewegung erkannt und als Auslöser für einen Ausrüttelvorgang für den Bohrkern verwendet wird. Bei der intuitiven Bewegung kann es sich beispielsweise um eine Schüttelbewegung des Kernbohrgeräts handeln. In einem zweiten Aspekt betrifft die Erfindung ein Kernbohrgerät zur Durchführung des vorgeschlagenen Verfahrens. Vorzugsweise umfasst das Kernbohrgerät eine Sensorik zur Erfassung der intuitiven Bewegung des Kernbohrgeräts, wobei die Sensorik beispielsweise einen Gyro-Sensor umfassen kann.

### Hintergrund der Erfindung:

Im Stand der Technik sind Kernbohrgeräte bekannt, mit denen zylinderförmige Bohrkerne aus festen Untergründen, wie Beton, Mauerwerk oder Stein, herausgeschnitten werden können. Kernbohrgeräte weisen als Werkzeug eine im Wesentlichen zylinderförmige Bohrkrone auf, die in ihrem Inneren hohl ist, um den Bohrkern aufzunehmen. Der Nutzer eines Kernbohrgeräts weiß aus Erfahrung, dass es eine Herausforderung darstellen kann, den Bohrkern aus der Bohrkrone zu entfernen.

Im Stand der Technik ist beispielsweise bekannt, den Bohrkern mit mechanischen Mitteln aus der Bohrkrone zu entfernen. Dazu wird die Bohrkrone vom Kernbohrgerät getrennt und es wird versucht, den Bohrkern durch Rütteln oder Hämmern aus der Bohrkrone zu lösen und aus dem Inneren der Bohrkrone zu entfernen. Dieses Vorgehen kann unter Umständen sehr mühsam und zeitaufwändig sein. Darüber hinaus kann die Bohrkrone durch die Hammerschläge beschädigt und ihre Lebenszeit verkürzt werden.

Im Stand der Technik sind daher andere Verfahren zum Lösen des Bohrkerns aus der Bohrkrone bekannt geworden, die im folgenden als elektronische Verfahren zur Lösung des Bohrkerns aus der Bohrkrone bezeichnet werden. Dabei verbleibt die Bohrkrone am Kernborgerät, wobei am Kernbohrgerät durch Betätigung eines eigens dafür vorgesehen Schalters ein Ausrüttelvorgang gestartet wird. Ein solcher Vorgang kann im Sinne der Erfindung als elektronischer Ausrüttelvorgang bezeichnet werden.

Allerdings hat sich gezeigt, dass die Vorsehung eines eigenen Schalters für die elektronische Ausrüttelfunktion aufwändig zu implementieren ist. Darüber hinaus ist die Vorsehung eines solchen Schalters aus Platzgründen nicht wünschenswert und es kann nicht sichergestellt werden, dass ein solcher Schalter ergonomisch sinnvoll durch einen Nutzer des Kernbohrgeräts zu betätigen wäre. Außerdem sorgen zusätzliche Schalter und Bedienelemente für einen zusätzlichen Platz- und Raumbedarf, was dem Bedürfnis nach kompakten, handlichen Werkzeuggeräten entgegensteht.

Die Aufgabe, die der vorliegenden Erfindung zugrunde liegt, besteht darin, die vorstehend beschriebenen Nachteile des Standes der Technik zu überwinden und ein Verfahren zum Lösen eines Bohrkerns aus einer Bohrkrone eines Kernbohrgeräts anzugeben, das ohne einen zusätzlichen Schalter für die elektronische Ausrüttelfunktion des Kernbohrgeräts auskommt. Darüber hinaus würde es die Fachwelt begrüßen, wenn die Ausrüttelfunktion möglichst intuitiv gestartet werden könnte, ohne dass der Nutzer aufwändige Tastenkombinationen betätigen oder Handgriff ausführen muss. Darüber hinaus soll das bereitzustellende Kernbohrgerät möglichst kompakt und handlich ausgebildet sein.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein Verfahren zum Lösen eines Bohrkerns aus einer Bohrkrone eines Kernbohrgeräts vorgesehen. Das Verfahren ist durch folgende Schritte gekennzeichnet:
a) Erfassung einer intuitiven Bewegung des Kernbohrgeräts durch das Kernbohrgerät,
b) Starten eines Ausrüttelvorgangs für den Bohrkern.

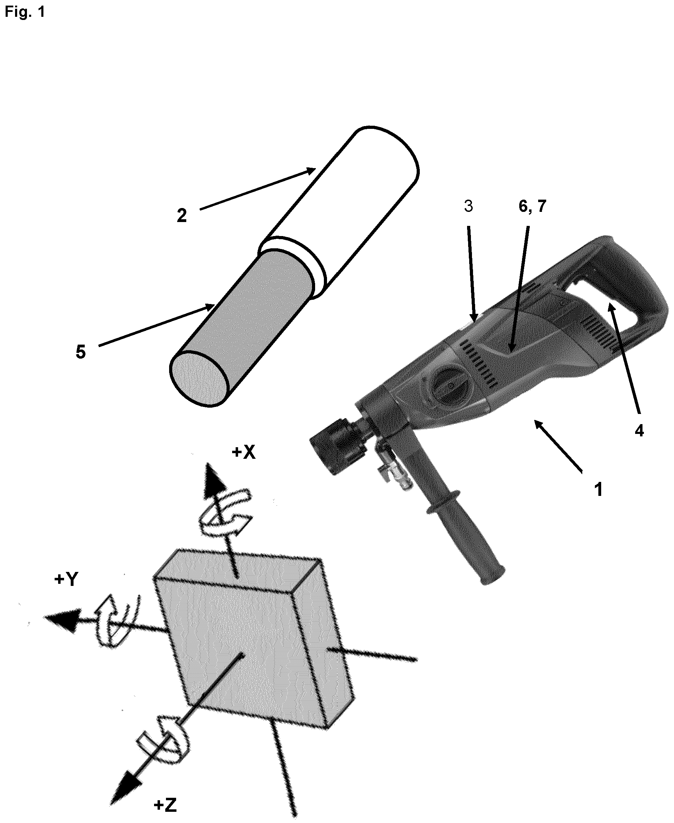

Mit dem vorgeschlagenen Verfahren ist es möglich, ein Verfahren zum bevorzugt automatischen Starten der elektronischen Ausrüttelfunktion bereitzustellen, das ohne einen zusätzlichen Schalter für die elektronische Ausrüttelfunktion des Kernbohrgeräts auskommt. Darüber hinaus ist das Verfahren besonders intuitiv in der Durchführung, da der Nutzer mit dem Kernbohrgerät eine intuitive Bewegung ausführt, die vom Kernbohrgerät erkannt werden kann. Dazu umfasst das Kernbohrgerät vorzugsweise eine geeignete Sensorik, die einen Gyro-Sensor zur Erfassung der intuitiven Bewegung des Kernbohrgeräts aufweist. Die Sensorik kann vorzugsweise als Sensoreinheit ausgebildet sein, wobei der mindestens eine Gyro-Sensor dieser Sensoreinheit vorzugsweise dazu eingerichtet ist, eine intuitive Bewegung des Kernbohrgeräts zu erkennen. Bei der intuitiven Bewegung kann es sich beispielsweise um eine Schüttelbewegung des Kernbohrgeräts handeln. Mit anderen Worten ist es im Sinne der Erfindung bevorzugt, dass die intuitive Bewegung des Kernbohrgeräts eine Schüttelbewegung umfasst, wobei die Erkennung der intuitiven Bewegung als Auslöser bzw. Startsignal für einen Ausrüttelvorgang für den Bohrkern verwendet werden kann. Bei der Schüttelbewegung wird das Kernbohrgerät im Wesentlichen entlang der Z-Achse eines gedachten Koordinatensystems (vgl. Fig. 1) bewegt, was einer Schüttelbewegung gleichkommt. Eine solche Schüttelbewegung ist aus dem Stand der Technik zum mechanischen Ausrütteln des Bohrkerns aus der Bohrkrone bekannt. Die Schüttelbewegung kann aber auch Anteile von Bewegungen in allen drei Raumrichtungen umfassen, sowie Rotationen um alle drei Raumachsen. Im Kontext der vorliegenden Erfindung wird die für den Nutzer bekannte und vertraute Schüttelbewegung als intuitive Bewegung ausgenutzt, um den vorzugsweise elektronischen Ausrüttelvorgang zum Ausrütteln des Bohrkerns aus der Bohrkrone zu starten bzw. zu initiieren. Der Start des Ausrüttelvorgangs erfolgt dann vorzugsweise automatisch, nachdem das Kernbohrgerät bzw. seine Sensorik eine intuitive Bewegung erkannt hat. Für den Nutzer ergibt sich der Vorteil, dass er sein Verhalten zum Entfernen des Bohrkerns aus der Bohrkrone im Wesentlichen unverändert beibehalten kann, nämlich das Bohrgerät zu schütteln, um den Bohrkern aus der Bohrkrone zu lösen. Allerdings ist es im Kontext der vorliegenden Erfindung ausreichend, die Schüttelbewegung weniger heftig durchzuführen. Vielmehr kann es ausreichen, die intuitive Schüttelbewegung lediglich anzudeuten bzw. nur so stark auszuführen, dass sie vom Kernbohrgerät bzw. seiner Sensorik, d.h. insbesondere dem Gyro-Sensor, erkannt werden kann. Der Nutzer erkennt vorteilhafterweise, ob seine intuitive Bewegung als solche vom Kernbohrgerät erkannt wurde, wenn das Kernbohrgerät mit einer rüttelnden Bestromung des Motors beginnt und das Kernbohrgerät den an sich bekannten elektronischen Ausrüttelvorgang (Mechatronic Torque Control, MTC) startet. Bei diesem Ausrüttelvorgang wird vorzugsweise ein starkes Drehmoment in abwechselnder Richtung erzeugt, wobei das erzeugte Drehmoment größer ist als das Haftmoment zwischen Bohrkrone und Bohrkern. Der Bohrkern wird durch das Drehmoment gelockert und kann aus der Bohrkrone gelöst bzw. entfernt werden.

Es ist im Sinne der Erfindung bevorzugt, dass das Kernbohrgerät einen Motor umfasst, wobei das Kernbohrgerät dazu eingerichtet ist, eine rüttelnde Bestromung des Motors zu bewirken.

Es ist im Sinne der Erfindung darüber hinaus bevorzugt, dass der Ausrüttelvorgang eine elektronische Funktion darstellt, die beispielsweise bereits im Kernbohrgerät implementiert sein kann. Anders als bei konventionellen Kernbohrgeräten, wie sie aus dem Stand der Technik bekannt sind, ist es im Kontext der vorliegenden Erfindung nicht erforderlich, den Ausrüttelvorgang mit einer eigens dafür vorgesehen Taste oder einem solchen Schalter zu starten. Vielmehr wird im Kontext der vorliegenden Erfindung die Fähigkeit des Kernbohrgerät ausgenutzt, Bewegungen, die mit ihm ausgeführt werden oder die auf es einwirken, zu erkennen, auszuwerten und zur Steuerung bzw. Initiierung einzelner Funktionen zu verwenden. Für die Erkennung dieser im Kontext der Erfindung als "intuitive Bewegungen" bezeichneten Bewegungen wird vorzugsweise eine Sensorik eingesetzt, die mindestens einen Gyro-Sensor umfasst. Mit anderen Worten ist es im Sinne der Erfindung bevorzugt, dass die Erfassung der intuitiven Bewegung des Kernbohrgeräts durch eine Sensorik umfassend mindestens einen Gyro-Sensor erfolgt. Der mindestens eine Gyro-Sensor kann beispielsweise auch für andere Funktionalitäten bzw. ihren Start verwendet werden. Beispielsweise kann die Active Torque Control-Funktion (ATC) auf den Daten des Gyro-Sensors beruhen.

Der Gyro-Sensor ist vorzugsweise dazu eingerichtet, Daten hinsichtlich der Bewegung des Kernbohrgeräts in allen drei Raumrichtungen zu erkennen. Insbesondere können dabei Drehungen um alle drei Raumachsen X, Y und Z erfasst werden. Die bevorzugt von dem Gyro-Sensor ermittelten Rotationsdaten hinsichtlich derX-, Y- und/oder Z-Achse können vorteilhafterweise für die Erkennung einer intuitiven Bewegung des Kernbohrgeräts durch den Nutzer verwendet werden. Ein beispielhaftes Koordinatensystem, das aus den drei Raumachsen X, Y und Z gebildet ist, ist in Fig. 1 abgebildet. Da vorzugsweise Bewegungen in allen drei Raumrichtungen als intuitive Bewegungen im Sinne der Erfindung durch das Kernbohrgerät erkannt werden können, besteht eine große Flexibilität und Freiheit bei der Auswahl und Festlegung der gewünschten intuitiven Bewegung. Die intuitive Bewegung kann im Sinne der Erfindung bevorzugt auch als "vereinbarte Gerätebewegung» oder «signifikante Bewegung» bezeichnet werden.

Es ist im Sinne der Erfindung bevorzugt, dass die Sensorik des Kernbohrgeräts dazu eingerichtet ist, insbesondere die «drehenden Bewegungsanteile» einer intuitiven Bewegung des Kernbohrgeräts zu erfassen. Dabei handelt es sich im Sinne der Erfindung bevorzugt, um diejenigen Bewegungsanteile, die eine Drehung um die drei Raumachsen X, Y und Z betreffen (siehe Figur 1). Es ist im Sinne der Erfindung bevorzugt, dass die intuitive Bewegung lineare und/oder drehende Bewegungsanteile umfassen kann. Die linearen Bewegungsanteile entsprechen dabei bevorzugt Bewegungen entlang der Raumachsen bzw. im Wesentlichen parallel zu ihnen. Das Kernbohrgerät bzw. seine Sensorik ist vorzugsweise dazu eingerichtet, sowohl lineare, als auch drehende Bewegungsanteile einer intuitiven Bewegung zu erkennen. Die Erfinder haben erkannt, dass das Kernbohrgerät, wenn es von einem Nutzer geschüttelt wird, keine streng lineare Bewegung ausführt, wie dies beispielsweise von einem steifen, mechanischen Testaufbau zu erwarten wäre. Im Kontext der vorliegenden Erfindung wurde insbesondere erkannt, dass die gekrümmten bzw. drehenden Anteile der Schüttelbewegung des Kernbohrgeräts besonders gut von einem Gyro-Sensor erkannt werden können, so dass es im Sinne der Erfindung bevorzugt ist, dass die Sensorik des Kernbohrgeräts mindestens einen Gyro-Sensor zur Detektion von insbesondere den gekrümmten Bewegungsanteilen der intuitiven Kernbohrgerätsbewegung umfasst.

In einer bevorzugten Ausgestaltung der Erfindung kann es vorgesehen sein, dass das Kernbohrgerät zwischen der Erfassung der intuitiven Bewegung und dem Start des Ausrüttelvorgangs durch eine weitere Handlung des Nutzers gestartet wird. Mit anderen Worten kann in dieser Ausgestaltung ein zusätzlicher Verfahrensschritt vorgesehen sein, bei dem der Nutzer neben der intuitiven Bewegung eine im Sinne der Erfindung als "weitere Handlung" bezeichnete Handlung durchführt, um das Kernbohrgerät zu starten.

Es ist im Sinne der Erfindung bevorzugt, dass das Kernbohrgerät während des Schüttelns betriebsbereit ist. Das bedeutet im Sinne der Erfindung bevorzugt, dass seine Geräte-Elektronik, sowie seine Sensorik aktiv sind. Vorzugsweise läuft allerdings der Motor des Kernbohrgeräts während des Schüttelvorgangs nicht. Auch der Trigger wird während des Schüttelns nicht betätigt. Es ist im Sinne der Erfindung bevorzugt, dass der Trigger nach dem Schütteln gedrückt wird, wodurch das Kernbohrgerät den Ausrüttelvorgang startet. Vorzugsweise erfolgt der Start des Ausrüttelvorgangs insbesondere durch den Motor des Kernbohrgeräts. Der Trigger kann dann wieder losgelassen werden, wodurch der Motor vorteilhafterweise aufhört zu laufen.

Bei der weiteren Handlung des Nutzers des Kernbohrgeräts kann es sich beispielsweise um eine Betätigung eines Einschalters des Kernbohrgeräts durch den Nutzer handeln. Mit anderen Worten umfasst das Verfahren in dieser bevorzugten Ausgestaltung den zusätzlichen Verfahrensschritt, dass das Kernbohrgerät durch den Nutzer eingeschaltet wird, wobei dieses Einschalten des Kernbohrgeräts vorzugsweise durch eine Betätigung des Einschalters des Kernbohrgeräts erfolgt. Der Einschalter des Kernbohrgeräts kann im Sinne der Erfindung vorzugsweise auch als "Trigger" oder "Schaltervorrichtung" bezeichnet werden.

Es ist im Sinne der Erfindung bevorzugt, dass zum Start des bevorzugt elektronischen Ausrüttelvorgangs zum Lösen des Bohrkerns aus der Bohrkrone im Kontext der vorliegenden Erfindung je nach Ausführungsform maximal zwei Handlungen durch den Nutzer erforderlich sind, nämlich die Ausführung einer intuitiven Bewegung mit dem Kernbohrgerät, sowie optional eine weitere Handlung, die beispielsweise in der Betätigung des Triggers des Kernbohrgeräts bestehen kann. Damit kann die Aktivierung des bevorzugt elektronisch ausgebildeten Ausrüttelvorgangs mit der vorliegenden Erfindung deutlich einfacher und intuitiver gestaltet werden als bei konventionellen Kernbohrgeräten, wie sie aus dem Stand der Technik bekannt sind. Vorteilhafterweise kann die Handhabung des vorgeschlagenen Kernbohrgeräts auf diese Weise deutlich vereinfacht werden gegenüber konventionellen Kernbohrgeräten. Außerdem kann bei der Konstruktion des Kernbohrgeräts auf einen zusätzlichen Schalter für das Einschalten des bevorzugt elektronischen Ausrüttelvorgangs verzichtet werden, da ein solcher durch das vorteilhafte Zusammenwirken der intuitiven Bewegung und ihrer Erkennung durch das Kernbohrgerät, wie es Gegenstand der vorliegenden Erfindung ist, nicht mehr erforderlich ist. Durch das Einsparen eines zusätzlichen Schalters kann durch die Erfindung ein besonders kompaktes, handliches und besser zu handhabendes Kernbohrgerät bereitgestellt werden.

Es ist im Sinne der Erfindung bevorzugt, dass der Ausrüttelvorgang durch eine zweite Handlung des Nutzers des Kernbohrgeräts beendet wird. Das bedeutet im Sinne der Erfindung bevorzugt, dass der bevorzugt elektronische Ausrüttelvorgang zum Lösen des Bohrkerns aus der Bohrkrone dadurch beendet werden kann, dass der Nutzer eine zweite Handlung ausführt. Dabei kann es sich entweder um dieselbe Handlung handeln, wie beim Einschalten des Ausrüttelvorgangs. Es kann aber im Sinne der Erfindung auch bevorzugt sein, dass das Einschalten des Ausrüttelvorgangs und das Ausschalten des Ausrüttelvorgangs durch unterschiedliche Handlungen des Nutzers bewirkt werden. In dem ersten Fall, bei dem die weitere und die zweite Handlung gleich sind, kann das Ein- und Ausschalten beispielsweise jeweils durch eine Betätigung des Einschalters des Kernbohrgeräts erfolgen. In dem zweiten Fall, bei dem die weitere und die zweite Handlung nicht gleich sind, kann beispielsweise das Einschalten des Ausrüttelvorgangs durch eine Betätigung des Einschalters des Kernbohrgeräts erfolgen, während das Ausschalten durch eine andere Handlung bewirkt wird, wie beispielsweise das Loslassen des Einschalters des Kernbohrgeräts. Es ist im Sinne der Erfindung insbesondere bevorzugt, dass das Ausschalten des Ausrüttelvorgangs durch ein Loslassen des Triggers des Kernbohrgeräts bewirkt wird. Das Ausschalten des Ausrüttelvorgangs wird im Sinne der Erfindung bevorzugt auch als Deaktivierung des Ausrüttelvorgangs bezeichnet. Dabei beendet das Kernbohrgerät vorzugsweise die rüttelnde Bestromung des Motors des Kernbohrgeräts, so dass die Rüttelbewegung zum Lösen des Bohrkerns aus der Bohrkrone aufhört.

Es ist im Sinne der Erfindung bevorzugt, dass der Ausrüttelvorgang durch eine rüttelnde Bestromung eines Motors des Kernbohrgeräts bewirkt wird. Das bedeutet, dass der Ausrüttelvorgang insbesondere darin besteht, dass der Motor des Kernbohrgeräts rüttelnd bestromt wird.

In einem zweiten Aspekt betrifft die Erfindung ein Kernbohrgerät zur Durchführung des vorgeschlagenen Verfahrens. Die für das Verfahren zum Lösen eines Bohrkerns aus einer Bohrkrone eingeführten Begriffe, Definitionen und technischen Vorteile gelten vorzugsweise für das Kernbohrgerät analog. Es ist im Sinne der Erfindung besonders bevorzugt, dass das Kernbohrgerät eine Sensorik umfassend mindestens einen Gyro-Sensor umfasst. Der Gyro-Sensor ist insbesondere dazu eingerichtet, Bewegungen des Kernbohrgeräts zu erfassen und die Grundlage dafür zu liefern, dass eine spezielle Bewegung des Kernbohrgeräts oder ein spezielles Bewegungsmuster als eine "intuitive Bewegung" im Sinne der Erfindung erkannt wird. Dazu können beispielhafte Bewegungen und/oder Bewegungsmuster, die mit einer "intuitiven Bewegung" assoziiert werden, in dem Kernbohrgerät hinterlegt sein, wobei das Kernbohrgerät durch einen Vergleich der von der Sensorik erfassten Bewegungen und/oder Bewegungsmuster mit den hinterlegten Bewegungen und/oder Bewegungsmustern ermitteln kann, ob eine "intuitive Bewegung" im Sinne der Erfindung vorliegt oder nicht. Diese Vorgänge bzw. Auswertungen können beispielsweise in einer Steuereinrichtung des Kernbohrgeräts ablaufen. Wenn eine "intuitive Bewegung" des Kernbohrgeräts durch das Kernbohrgerät bzw. seine Sensorik erkannt wird, wird der bevorzugt elektronisch ausgebildete Ausrüttelvorgang des Kernbohrgeräts vorzugsweise automatisch gestartet und somit der Bohrkern aus der Bohrkrone entfernt. Es ist im Sinne der Erfindung bevorzugt, dass das Kernbohrgerät eine Steuervorrichtung umfasst, die dazu eingerichtet ist, eine intuitive Bewegung des Kernbohrgeräts zu erkennen und den Ausrüttelvorgang als Reaktion auf die Erkennung der intuitiven Bewegung zu starten.

Es ist im Sinne der Erfindung ganz besonders bevorzugt, dass das Kernbohrgerät ohne einen zusätzlichen Schalter für eine Aktivierung des Ausrüttelvorgangs auskommt. Wie beschrieben, kann auf einen eigens für den Start des Ausrüttelvorgangs bestimmten Schalter verzichtet werden, da der Start des Ausrüttelvorgangs erfindungsgemäß durch eine Erkennung einer intuitiven Bewegung des Kernbohrgeräts bewirkt wird. Mit anderen Worten können vorzugsweise bereits vorhandene Sensoren bzw. bereits anderweitig erhobene Daten, beispielsweise Rotationsdaten, durch die Erfindung besser ausgenutzt und zur Steuerung weiterer Funktionen, wie zum Beispiel dem Ausrüttelvorgang, verwendet werden.

Vorteile der Erfindung bestehen insbesondere darin, dass eine besonders intuitive Aktivierung des Ausrüttelvorgang zum Lösen eines Bohrkerns aus einer Bohrkrone bereitgestellt werden kann.

Darüber hinaus wird eine einfache, intuitive und übersichtliche Bedienung des Kernbohrgeräts ermöglicht, die insbesondere mit einer vergleichsweise geringen Anzahl von Schaltern auskommt. Dadurch können insbesondere auch die Herstellungskosten für das Kernbohrgerät geringgehalten werden und ein platzsparendes, kompaktes Kernbohrgerät bereitgestellt werden.

Dies kann insbesondere dann von besonderem Vorteil sein, wenn kein ständer- sondern ein handgeführtes Kernbohrgerät bereitgestellt werden soll.

Die vorliegende Erfindung betrifft in einem Ausführungsbeispiel ein Verfahren zur Entfernung eines Bohrkerns aus einer Bohrkrone eines Kernbohrgeräts. Dabei wird zunächst ein Kernbohrgerät mit einer Bohrkrone bereitgestellt, wobei in der Bohrkrone ein Bohrkern aus einer zuvor durchgeführten Kernbohrung enthalten sein kann. Das Kernbohrgerät umfasst eine Sensoreinheit zur Erkennung einer vereinbarten Gerätebewegung zur Entfernung des Bohrkerns aus der Bohrkrone, wobei die vereinbarte Gerätebewegung vom Nutzer des Kernbohrgeräts mit dem Kernbohrgerät ausgeführt wird. Wenn der Nutzer während der Durchführung der Gerätebewegung darüber hinaus eine Schaltervorrichtung des Kernbohrgeräts betätigt, kann ein mechanischer Vorgang zur Entfernung des Bohrkerns aus der Bohrkrone durch das Kernbohrgerät gestartet werden.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert.

Es zeigt:
- Fig. 1: Ansicht einer beispielhaften bevorzugten Ausführungsform der Erfindung

### Ausführungsbeispiele und Figurenbeschreibung:

Figur 1 zeigt eine mögliche Ausgestaltung der Erfindung. Insbesondere zeigt Fig. 1 ein Kernbohrgerät 1 zum Herausschneiden von Bohrkernen 5 aus einem harten Untergrund, wie Beton, Stein oder Mauerwerk. Das Werkzeug des Kernbohrgeräts 1 ist eine Bohrkrone 2, in der der Bohrkern 5 während des Schneidevorgangs aufgenommen wird. Bohrkrone 2 und Bohrkern 5 sind oben links in Fig. 1 schematisch angedeutet. Im Kontext der vorgeschlagenen Erfindung wird ein Verfahren zum Lösen eines solchen Bohrkerns 5 aus der Bohrkrone 2 eines Kernbohrgeräts 1 vorgeschlagen. Dazu kann das Kernbohrgerät 1 von einem Nutzer geschüttelt werden, wobei diese Schüttelbewegung von dem Kernbohrgerät 1 als eine «intuitive Bewegung» im Sinne der Erfindung erkannt werden kann. Das Kernbohrgerät 1 kann die intuitive Bewegung als Startsignal für einen bevorzugt elektronischen Ausrüttelvorgang verwenden, der in dem Kernbohrgerät 1 implementiert sein kann. Zur Erkennung der intuitiven Bewegung des Kernbohrgeräts 1 kann das Kernbohrgerät 1 eine Sensorik 3 umfassen, die insbesondere einen Gyro-Sensor 3a umfasst. Ferner kann das Kernbohrgerät 1 eine Steuervorrichtung 7 und einen Motor 6 umfassen. Der Motor 6 des Kernbohrgeräts 1 ist insbesondere dazu eingerichtet, einer rüttelnden Bestromung ausgesetzt zu werden, was vorteilhafterweise zu dem bevorzugt elektronischen Ausrüttelvorgang für den Bohrkern 5 führt. Das Kernbohrgerät 1 kann ferner einen Schalter 4 aufweisen, mit dem das Kernbohrgerät 1 von einem Nutzer aktiviert bzw. eingeschaltet werden kann. Der Sensor 3 kann beispielsweise in räumlicher Nähe zu der Elektronik des Kernbohrgeräts 1 angeordnet sein.

Es ist im Sinne der Erfindung bevorzugt, dass das Kernbohrgerät 1 ohne einen zusätzlichen Schalter zur Aktivierung des Ausrüttelvorgangs auskommt. Vorzugsweise ist die Steuervorrichtung 7 des Kernbohrgeräts 1 dazu eingerichtet, eine intuitive Bewegung des Kernbohrgeräts 1 zu erkennen und den Ausrüttelvorgang - bevorzugt automatisch - als Reaktion auf die Erkennung der intuitiven Bewegung zu starten. Bei der intuitiven Bewegung des Kernbohrgeräts 1 kann es sich insbesondere um eine Schüttelbewegung entlang der Z-Achse eines gedachten Koordinatensystems handeln, das im unteren Bereich von Fig. 1 dargestellt ist. Insbesondere sind in Fig. 1 auch mögliche Drehbewegungen um die drei Raumachsen X, Y und Z dargestellt, die von dem Kernbohrgerät 1 ausgeführt und von der Sensorik 3 des Kernbohrgeräts 3 als intuitive Bewegung erkannt werden können.

In einem Ausführungsbeispiel betrifft die Erfindung ein Verfahren zur Entfernung eines Bohrkerns 5 aus einer Bohrkrone 2 eines Kernbohrgeräts 1, wobei das Verfahren durch die folgenden Verfahrensschritte gekennzeichnet sein kann:
a) Bereitstellung eines Kernbohrgeräts 1 mit einer Bohrkrone 2, wobei in der Bohrkrone 2 ein Bohrkern 5 aus einer zuvor durchgeführten Kernbohrung enthalten ist,
b) Erkennung einer vereinbarten Gerätebewegung zur Entfernung des Bohrkerns 5 aus der Bohrkrone 5 durch eine Sensoreinheit 3, wobei die vereinbarte Gerätebewegung vom Nutzer des Kernbohrgeräts 1 mit dem Kernbohrgerät 1 ausgeführt wird,
c) Betätigung einer Schaltervorrichtung 4 des Kernbohrgeräts 1 durch den Nutzer,
d) Start eines Vorgangs zur Entfernung des Bohrkerns 5 aus der Bohrkrone 2 durch das Kernbohrgerät 1.

Die vereinbarte Gerätebewegung kann im Sinne der Erfindung bevorzugt auch als intuitive Bewegung des Kernbohrgeräts 1 bezeichnet werden. Die Begriffe Schaltervorrichtung, Einschalter oder Trigger werden im Kontext der vorliegenden Erfindung synonym verwendet und mit dem Bezugszeichen 4 bezeichnet. Die Position des Einschalters 4, wie sie in Fig. 1 dargestellt ist, ist beispielhaft zu verstehen, wobei viele andere Positionen an dem Kernbohrgerät 1 denkbar und möglich sind.

Es ist im Sinne der Erfindung bevorzugt, dass der Ausrüttelvorgang zur Entfernung des Bohrkerns 5 aus der Bohrkrone 2 beendet wird, wenn die Betätigung der Schaltervorrichtung 4 durch den Nutzer beendet wird. Vorzugsweise weist das Kernbohrgerät 1 eine Sensoreinheit 3 zur Erkennung einer intuitiven Bewegung des Kernbohrgeräts 1 auf, wobei diese intuitive Bewegung vom Nutzer des Kernbohrgeräts 1 mit dem Kernbohrgerät 1 ausgeführt werden kann. Es ist im Sinne der Erfindung bevorzugt, dass die Sensoreinheit 3 einen Gyrosensor 3a umfasst.

### Bezugszeichenliste

- 1: Kernbohrgerät
- 2: Bohrkrone
- 3: Sensorik
3a: Gyro-Sensor
- 4: Einschalter
- 5: Bohrkern
- 6: Motor des Kernbohrgeräts
- 7: Steuervorrichtung des Kernbohrgeräts

## Patentansprüche

1. Verfahren zum Lösen eines Bohrkerns (5) aus einer Bohrkrone (2) eines Kernbohrgeräts (1) **umfassend die folgenden Verfahrensschritte:**
a) Erfassung einer intuitiven Bewegung des Kernbohrgeräts (1) durch das Kernbohrgerät (1),
b) Starten eines Ausrüttelvorgangs für den Bohrkern (5).

2. Verfahren nach Anspruch 1
**dadurch gekennzeichnet, dass**
zwischen den Verfahrensschritten a) und b) das Kernbohrgerät (1) durch eine weitere Handlung eines Nutzers des Kernbohrgeräts (1) gestartet wird.

3. Verfahren nach Anspruch 1 oder 2
**dadurch gekennzeichnet, dass**
der Ausrüttelvorgang durch eine zweite Handlung des Nutzers des Kernbohrgeräts (1) beendet wird.

4. Verfahren nach einem der vorhergehenden Ansprüche
**dadurch gekennzeichnet, dass**
der Ausrüttelvorgang eine elektronische Funktion ist, die im Kernbohrgerät (1) implementiert ist.

5. Verfahren nach einem der vorhergehenden Ansprüche
**dadurch gekennzeichnet, dass**
der Ausrüttelvorgang durch eine rüttelnde Bestromung eines Motors (6) des Kernbohrgeräts (1) bewirkt wird.

6. Verfahren nach einem der vorhergehenden Ansprüche
**dadurch gekennzeichnet, dass**
die Erfassung der intuitiven Bewegung des Kernbohrgeräts (1) durch eine Sensorik (3) erfolgt.

7. Verfahren nach Anspruch 6
**dadurch gekennzeichnet, dass**
die Sensorik (3) mindestens einen Gyro-Sensor (3a) umfasst.

8. Verfahren nach einem der vorhergehenden Ansprüche
**dadurch gekennzeichnet, dass**
die intuitive Bewegung des Kernbohrgeräts (1) eine Schüttelbewegung umfasst.

9. Kernbohrgerät (1) zur Durchführung des Verfahrens nach einem der vorhergehenden Ansprüche
**dadurch gekennzeichnet, dass**
das Kernbohrgerät (1) eine Sensorik (3) zur Erfassung einer intuitiven Bewegung des Kernbohrgeräts (1) umfasst.

10. Kernbohrgerät (1) nach Anspruch 9
**dadurch gekennzeichnet, dass**
die Sensorik (3) mindestens einen Gyro-Sensor (3a) umfasst.

11. Kernbohrgerät (1) nach Anspruch 9 oder 10
**dadurch gekennzeichnet, dass**
das Kernbohrgerät (1) ohne einen zusätzlichen Schalter für eine Aktivierung des Ausrüttelvorgangs auskommt.

12. Kernbohrgerät (1) nach einem der Ansprüche 9 bis 11
**dadurch gekennzeichnet, dass**
das Kernbohrgerät (1) eine Steuervorrichtung (7) umfasst, die dazu eingerichtet ist, eine intuitive Bewegung des Kernbohrgeräts (1) zu erkennen und den Ausrüttelvorgang als Reaktion auf die Erkennung der intuitiven Bewegung zu starten.

13. Kernbohrgerät (1) nach einem der Ansprüche 9 bis 12
**dadurch gekennzeichnet, dass**
das Kernbohrgerät (1) einen Motor (6) umfasst, wobei das Kernbohrgerät (1) dazu eingerichtet ist, eine rüttelnde Bestromung des Motors (6) zu bewirken.
